# EUROPEAN PATENT APPLICATION

(11) **EP 1 870 898 A1**
(43) Date of publication of application: **26.12.2007**
(21) Application number: 07105133.8
(22) Date of filing: 28.03.2007
(51) Int. Cl.: G11B 27/32, G11B 27/34, H04N 5/445, G06F 17/30

(54) **Provision of file information in a video apparatus**

(30) Priority: 21.06.2006 KR 20060055969
(71) Applicant: SAMSUNG ELECTRONICS CO., LTD., Suwon-si Gyeonggi-do 442-742 (KR)
(72) Inventor: Lee, Sang-hee, Bukgajwa 2-dong, Seodaemun-gu, Seoul (KR); Kim, Dae-gu, Jung-gu, Seoul (KR); Yim, Jin-ho, Yeongtong-gu, Suwon-si, Gyeonggi-do (KR); Lee, Dong-heon, Seoul (KR); Kim, Won-il, Chungcheongbuk-do (KR)
(74) Representative: Pisani, Diana Jean

(57) **Abstract**

A video appliance (100) includes a control unit (170) for creating an integrated file list having entries corresponding to files stored in a plurality of recording media (115, 250) and controlling a combining unit (135) to combine a video signal to be displayed with the integrated file list. The entries in the list may be classified and arranged to file type and may be limited to a selected portion of the files stored on the various recording media (115, 250), e.g. moving image files, still image files and/or music files. A user can efficiently manage files dispersedly stored in several recording media using the integrated file list.

## Description

The present invention relates to the provision of information in a video apparatus. More particularly, the present invention relates to a method of providing a list of files and a video appliance arranged to perform such a method.

Recently, video appliances equipped with an in-built recording medium have become available, such as television (TV) sets and set-top boxes having hard disk drives for recording television programmes. Such a video appliance can reproduce files stored in its inbuilt recording medium.

Furthermore, such video appliances can be connected to, and communicate with, an external appliance so that the video appliance can reproduce a file stored in a recording medium built into the external appliance.

Such video appliances provides lists of stored files via a display, so that a user can select a file to be reproduced. These file lists are created for each recording medium. Therefore, it is difficult for the user to effectively manage the files stored in multiple recording media.

According to the present invention, a video appliance comprises a control unit configured to compile a list of files and a combining unit arranged to combine a video signal to be displayed with said list, wherein the control unit is configured to include in said list entries corresponding to files stored in a plurality of recording media.

Since a single integrated file list can be created, a user can manage the files stored in a plurality of recording media more efficiently when compared with prior art lists. Such advantages are particularly marked where a considerable number of recording media are available to a user, for example, where a plurality of recording media are provided within the video appliance and/or a number of external apparatuses are connected to the video appliance.

One of the plurality of recording media may be a recording medium built in the video appliance. Another of the plurality of recording media may be a recording medium provided in an external appliance communicably connected to the video appliance.

The integrated file list may include entries for only a selection of the files stored in the plurality of recording media. Alternatively, the integrated file list may include entries all of the files stored in the plurality of recording media.

Entries in the integrated file list may be classified and arranged according to file type. Examples of file types may include a moving image file, a still image file or a music file.

The video appliance may further comprise a processing unit for processing a file in order to reproduce it. The control unit may input the file, selected by a user from the integrated file list, to the processing unit.

The present invention also provides a method of providing a file list in a video appliance, the method comprising creating a list of files stored in a plurality of recording media and combining a video signal to be displayed with the file list.

One of the plurality of recording media may be a recording medium built in a video appliance. Another of the plurality of recording media may be a recording medium provided in an external appliance communicably connected to the video appliance.

The integrated file list may include entries corresponding to a selected portion or to all of the files stored in one of the recording media and a corresponding selected portion or all of the files stored in another of the recording media.

The integrated file list may enumerate the files in such a manner that the files are classified and arranged according to file types of the files.

The file type may include any one of a moving image file, a still image file and a music file.

Examples of embodiments of the present invention will now be described with reference to the attached drawing figures, wherein;
FIG. 1 is a block diagram of a video appliance according to an embodiment of the present invention;
FIG. 2 depicts one example of a file status table;
FIG. 3 is a flowchart of a method of providing an integrated file list according to an embodiment of the present invention;
FIG. 4 depicts one example of an integrated file list created using the method of FIG. 3;
FIG. 5 is a block diagram of a video apparatus according to another embodiment of the present invention; and
FIG. 6 is a flowchart of a method of providing an integrated file list according to another embodiment of the present invention.

Throughout the following detailed description and in the accompanying drawings, like reference numerals will be understood to refer to like parts, components and structures.

The matters details of the described embodiments, such as details of their construction and elements, are provided to assist in a comprehensive understanding of the invention. Alternative embodiments of the invention may be implemented which differ in respect of such details. Also, where functions or constructions are well known in the art, they are not described in unnecessary detail.

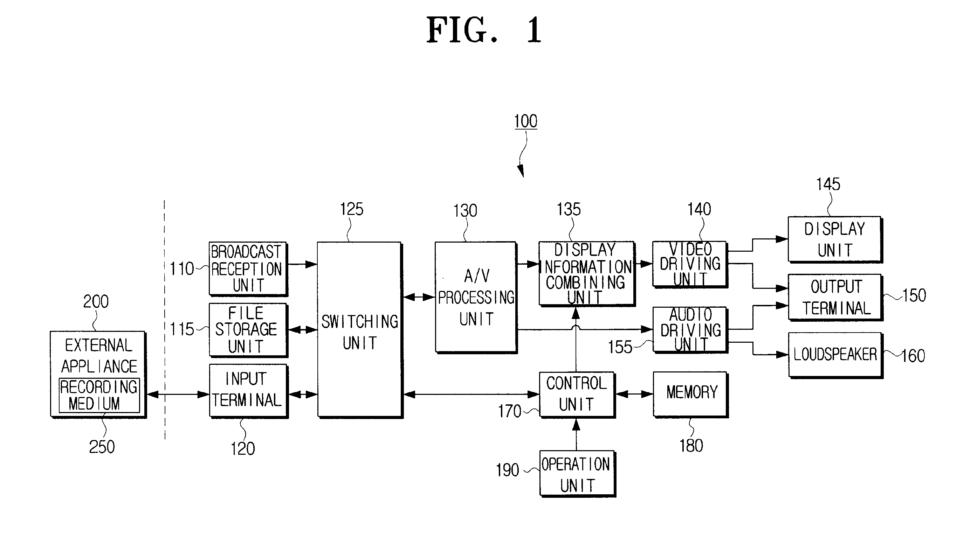

FIG. 1 is a block diagram of a video appliance 100 according to an embodiment of the present invention. The video appliance 100 of FIG. 1 provides an integrated file list on a display so that a user can select a desired file. The term "integrated file list" relates to a single list of files stored in a plurality of separate recording media.

The video appliance 100 includes a broadcast reception unit 110, a file storage unit 115, an input terminal 120, a switching unit 125, an audio/video (A/V) processing unit 130, a display information combining unit 135, a video driving unit 140, a display unit 145, an output terminal 150, an audio driving unit 155, a loudspeaker 160, a control unit 170, a memory 180 and an operation unit 190. In this example, the video appliance 100 is connected to an external appliance 200, which is equipped with an in-built recording medium 250.

The broadcast reception unit 110 tunes and demodulates a TV broadcast signal.

The file storage unit 115 stores a file in a recording medium and/or reads a file from the recording medium. The file storage unit 115 may include various recording media as a means for storing a file. A typical example is a hard disk drive (HDD).

The input terminal 120 provides a communication interface so that the video appliance can communicate with the external appliance 200. The external appliance 200 connected to the input terminal 120 can include a personal computer (PC), a camera, a camcorder, a digital versatile disk (DVD) player, a portable media player (PMP), an HDD player, and a memory card. Any appliance with a recording medium recording a file may serve as a role of the external appliance 200.

The switching unit 125 performs a switching operation so that data is transmitted from a selected one of the broadcast reception unit 110, the file storage unit 15 and the input terminal unit 120 to the A/V processing unit 130 or the control unit 170. The switching unit 125 is controlled by the control unit 170.

The A/V processing unit 130 performs signal processing so that a video and/or audio signal transmitted through the switching unit 125 can be reproduced. The A/V processing unit 130 transmits the video signal to the display information combining unit 135 and the audio signal to the audio driving unit 155.

The display information combining unit 135 combines the video signal output from the A/V processing unit 130 with display information such as characters, symbols, figures or graphics. In this particular example, the display information combining unit 135 may combine the display information in an On Screen Display (OSD) mode. The combination processing operation of the display information combining unit 135 is controlled by the control unit 170.

The video driving unit 140 displays the combined video signal and display information output from the display information combining unit 135 on the display unit 145 or transmits the combined video signal to another external appliance (not shown) connected to the video appliance 100 via the output terminal 150.

The audio driving unit 155 outputs the audio output from the A/V processing unit 130 via the loudspeaker 160 or transmits the audio output to another external appliance (not shown) connected to the video appliance 100 via the output terminal 150.

The control unit 170 controls the operation of the video appliance 100 in response to commands input by the user through the operation unit 190.

In particular, the control unit 170 receives information on the files, hereinafter referred to as "file information", which are stored in the file storage unit 115, from the file storage unit 115 via the switching unit 125, and receives file information on the files stored in the recording medium 250 from the external appliance 200 via the input terminal 120 and the switching unit 125. Here, the term "file information" means a file type, a file name, file creating data, etc. of the stored file.

The control unit 170 creates and updates a file status table on the basis of the received file information, and stores the created/updated file status table in the memory 180.

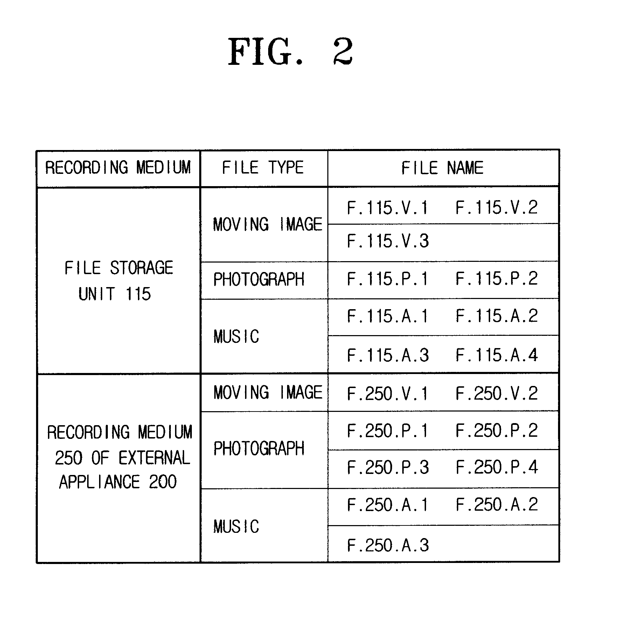

The file status table is composed of the file information on the files stored in the recording medium, i.e., the file storage unit 115, built into the video appliance 100 and the file information on the files stored in the recording medium 250 provided in the external appliance 200. FIG. 2 depicts an example of a file status table.

In the example of FIG. 2, the file storage unit 115 has stored thereon:
(a) moving image files "F.115.V.1", "F.115.V.2" and "F.115.V.3",
(b) photograph files "F.115.P.1" and "F.115.P.2", and
(c) music files "F.115.A.1", "F.115.A.2", "F.115.A.3" and "F.115.A.4".

Meanwhile, the recording medium 250 of the external appliance 200 has stored thereon:
moving image files "F.250.V.1" and "F.250.V.2",
   (b) photograph files "F.250.P.1", "F.250.P.2", "F.250.P.3" and "F.250.P.4", and
   (c) music files "F.250.A.1", "F.250.A.2", and "F.250.A.3".

The control unit 170 creates the integrated file list by referring to the file status table stored in the memory 180. Furthermore, the control unit 170 controls the display information combining unit 135 to show the created integrated file list on the display.

In the creation of the integrated file list, the control unit 170 may classify and group entries corresponding to the files according to file type. Examples of file types may include moving image files, still image files and music files.

The user can select a desired file from the files in the integrated file list. The control unit 170 then controls the file storage unit 115, the external appliance 200, and the switching unit 125 so as to input the file selected by the user to the A/V processing unit 130 for reproduction.

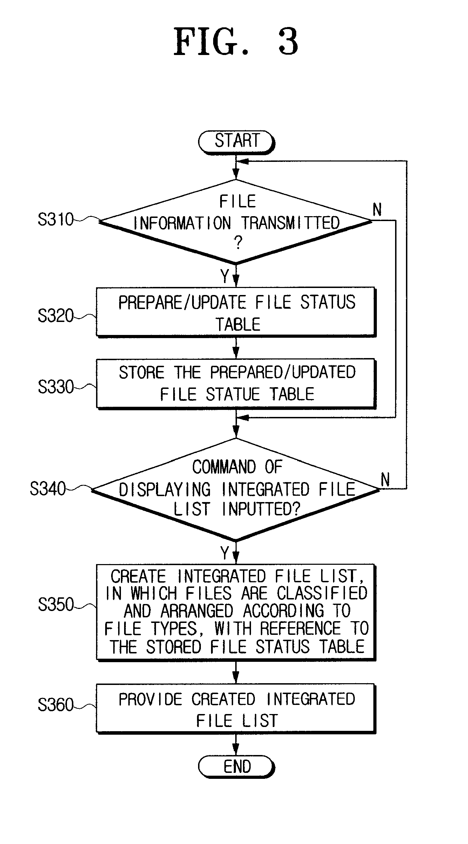

A process of providing the integrated file list according to an embodiment of the invention will now be described with reference to FIG. 3.

When the control unit 170 receives file information from the file storage unit 115 and/or the external appliance 200 ("Yes" in operation S310), the control unit 170 prepares and updates the file status table on the basis of the file information (operation S320), and stores the prepared/updated file status table in the memory 180 (operation S330).

When a command for displaying the integrated file list is received from the user, via the operation unit 190 ("Yes" in operation S340), the control unit 170 creates the integrated file list, in which files are classified and arranged according to their type, based on the file status table stored in the memory 180 (operation S350). The control unit 170 controls the display information combining unit 135 to present the created file list on the display unit 145 (operation S360).

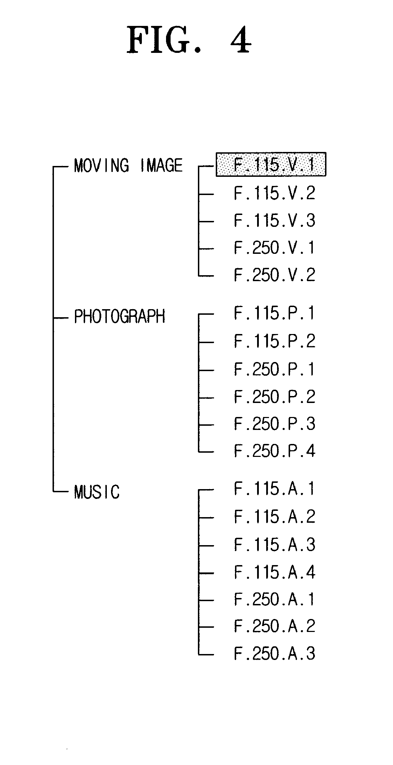

FIG. 4 depicts an example of an integrated file list created in operation S350 of FIG. 3, based on the file status table shown in FIG. 2. The integrated file list lists the files stored in the file storage unit 115 and in the recording medium 250 of the external appliance 200. Furthermore, in the integrated file list, the entries corresponding to the files are classified and arranged according to file type, i.e. moving image files, still image files and music files.

In this particular embodiment, the file storage unit 115 and the recording medium 250 are shown and described as examples of recording media in which the files listed in the integrated file list are stored. However, this particular arrangement is merely one example to which the present invention can be applied. In some other embodiments of the invention, an integrated file list may be created that lists files stored in two or more recording media built in the video appliance 100 and/or files stored in recording media provided in two or more external appliances. For example, an integrated file list may be created to list files stored in two or more recording media built into the video appliance 100 and the recording media provided in two or more external appliances 200.

Furthermore, an embodiment in which all files stored in a plurality of recording media are listed in a single list has been shown and described. However, several integrated file lists can be created in respect of files stored in multiple recording media. For example, an integrated file list may be compiled in which only moving image files stored in various ones of a plurality of recording media are listed. Alternatively, an integrated file list of still image files or an integrated file list of music files stored in the plurality of recording media may be created. In other words, an integrated file list may be created that lists only a selected portion of the files stored in one recording medium and a corresponding selected portion of the files stored in another recording medium.

Since the video appliance shown in FIG. 1 merely an example of an embodiment of the present invention, other video appliances may be devised which embody the invention but do not necessarily include all of the blocks shown in FIG. 1. Any of the blocks may be omitted. For example, in a case in which a video appliance is a set-top box, the display unit 145 and the loudspeaker 160 may be omitted.

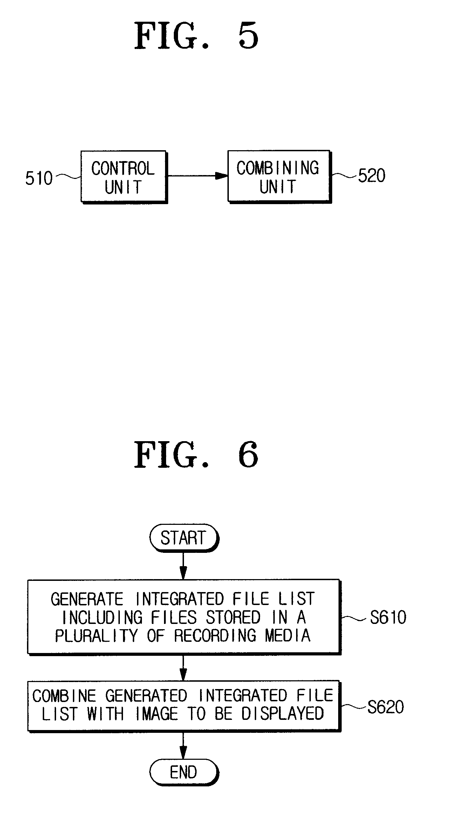

For example, in another embodiment of the invention, depicted in FIG. 5, a video appliance includes a control unit 510 and a combining unit 520. The combining unit 520 combines a video signal to be displayed with desired information. The control unit 510 creates an integrated file list of files stored in a plurality of recording media, and controls the combining unit 520 to combine the video signal to be displayed with the created integrated file list.

With reference to FIG. 6, the control unit 510 creates the integrated file list (operation S610), and controls the combining unit 520 to combine a video signal to be displayed with the created integrated file list (operation S620).

As described above, in embodiments of the present invention, an integrated file list, that is, a list of files stored in a plurality of separate recording media, can be provided to the user. Consequently, the user can manage files stored in many recording media efficiently and effectively.

While the invention has been shown and described with reference to certain embodiments thereof, it will be understood by those skilled in the art that various changes in form and details may be made therein without departing from the scope of the invention as defined by the appended claims.

## Claims

1. A video appliance (100) comprising:
a control unit (170) configured to compile a list of files; and
a combining unit (135) arranged to combine a video signal to be displayed with said list;
wherein:
the control unit (170) is configured to include in said file list entries corresponding to files stored in a plurality of recording media (115, 250).

2. The video appliance (100) of claim 1, wherein the plurality of recording media (115, 250) comprises a recording medium (115) included in the video appliance (100) and a recording medium (250) included in an external appliance (200) connected to the video appliance (100).

3. The video appliance (100) of claim 1 or 2, wherein the control unit (170) is arranged so that said file list includes entries corresponding to all of the files stored in the plurality of recording media (115, 250).

4. The video appliance (100) of claim 1 or 2, wherein the control unit (170) is arranged so that said file list includes entries corresponding to only a selected portion of the files stored in the plurality of recording media (115, 250).

5. The video appliance (100) of any of the preceding claims, wherein the control unit (170) is arranged to classify the files and to organize the entries in said file list according to file type.

6. The video appliance (100) of claim 5, wherein the file types comprise at least one of a moving image file, a still image file and a music file.

7. The video appliance (100) of claim 1, further comprising a processing unit (130) arranged to processes a file for reproduction;
wherein the control unit (170) is arranged to input the file, corresponding to an entry selected from the file list, to the processing unit (130).

8. The video appliance (100) of claim 7, wherein the entry is selected by a user.

9. A method of providing a file list in a video appliance (100), the method comprising:
creating a list of files stored in a plurality of recording media (115, 250); and
combining a video signal to be displayed with the file list.

10. The method of claim 9, wherein the plurality of recording media (115, 250) comprises a recording medium (115) included in the video appliance (100) and a recording medium (250) included in an external appliance (200) connected to the video appliance (100).

11. The method of claim 9 or 10, wherein the file list includes entries corresponding to all of the files stored in the plurality of recording media (115, 250).

12. The method of claim 9 or 10, wherein the file list includes entries corresponding to only a selected portion of the files stored in the plurality of recording media (115, 250).

13. The method of claim 9, 10, 11 or 12, wherein the entries are classified and arranged in the file list according to file type.

14. The method of claim 13, wherein the file types comprise at least one of a moving image file, a still image file and a music file.
